# EUROPEAN PATENT APPLICATION

(11) **EP 2 530 134 A1**
(43) Date of publication of application: **05.12.2012**
(21) Application number: 11736551.0
(22) Date of filing: 31.01.2011
(51) Int. Cl.: C10B 7/04, C10B 3/02, C10B 47/38, C10G 1/02, C10G 3/00, B09B 3/00

(54) **VIBRATORY HEAT EXCHANGER UNIT FOR LOW TEMPERATURE CONVERSION FOR PROCESSING ORGANIC WASTE AND PROCESS FOR PROCESSING ORGANIC WASTE USING A VIBRATORY HEAT EXCHANGER UNIT FOR LOW TEMPERATURE CONVERSION**

(30) Priority: 29.01.2010 BR PI1000208
(71) Applicant: SPPT Pesquisas Tecnológicas LTDA, CEP: 13803-280 - Mogi-Mirim - SP (BR)
(72) Inventor: SOARES GUEDES, Álvaro, CEP: 12607-360 - Lorena - SP (BR)
(74) Representative: Sarpi, Maurizio
(86) International application number: PCT/BR2011/000037
(87) International publication number: WO 2011/091499

(57) **Abstract**

The present invention relates to a reactor and the respective process that uses said reactor for processing lipid- and protein-rich organic waste by means of the technique of low temperature conversion, the reactor also being used for processing organochlorine-contaminated waste and processing lignocellulosic organic waste, the main products generated during processing being oil and coal. The reactor consists essentially of a single-pass shell-and-tube heat exchanger, which has a number of cylindrically-shaped heating tubes and is assembled so that the axis of the heating tubes is positioned vertically, with a triangular distribution, which facilitates the construction of units with a circular cross section and facilitates the distribution of the raw material. The reactor operates continuously as there is a system that induces vibration of the unit, allowing input of raw material and output of coal, and also a unit for condensing the vapours produced during the process, in order to produce fuel oil.

## Description

### TECHNICAL FIELD

The present invention relates to a vibrating heat exchanger equipment for low temperature conversion, particularly a reactor and respective process for lipid and protein rich organic waste processing by the technique of low temperature conversion, sludge-type waste, pig manure, cattle manure, poultry litter, rendering plant for refrigerators, sugarcane industry's vinasse/cake filter, residual filter cakes/chaffs from the biodiesel industry, oil slurry and sludge, waste tires, plastic waste, especially polyethylene, among others, the reactor in question also being used to treat waste contaminated with organochlorine contaminants, including recovery of contaminated soils, and the main products generated in this process being oil and coal. The present invention can also be used for processing lignocellulosic organic waste such as waste from reforestation, sawdust, crop residues, grass, sugarcane bagasse, etc., in this case aiming at producing coal.

### STATE OF THE ART

As is known by those skilled in the art of this specific area, the study of Professor Ernest Bayer and staff at the University of Tubingen, Germany, in the 80's [Bayer, 1988], is highlighted in the scientific and technical literature as marking the birth of the technology of Low Temperature Conversion (LTC) and these studies have focused on the study of thermal decomposition of lipid and protein rich raw materials, especially the sewage sludge.

The term Low Temperature Conversion started to be adopted to describe pyrolysis processes self-catalyzed by inorganic elements present in the raw material itself, which occurs at a relatively low temperature (around 380°C) and air tightness (atmosphere oxygen free) conditions and that are optimized for the conversion of raw material into oil (transportable fuel). Besides the oil, the LTC process also produces coal. Prof. Ernest Bayer's studies allowed a better understanding of the dynamics of the process of natural formation of petroleum.

The Low Temperature Conversion technology is the most correct, from the environmental and economic point of view, for treatment of lipid and protein rich organic agro-industrial waste, among which may be cited: sewage sludge, pig manure, cattle manure, poultry litter, rendering plant for refrigerators, sugarcane industry's vinasse/filter cake, residual filter cakes/chaffs from the biodiesel industry, oil slurry and sludge, waste tires, plastic waste (especially polyethylene - PE), among others. The present invention can also be used for processing lignocellulosic organic waste such as reforestation, sawdust, crop residues, grass, sugarcane bagasse, etc., in this case aiming at producing coal. There is a wide range of biomass that can be harnessed from this technology, and in this list could be included the treatment of municipal solid waste (MSW) and remediation of soil contaminated with organochlorine contaminants, including the current "dumps". The main advantages of LTC are:

At Low Temperature Conversion, oil and coal are generated. Non-condensable gases and reaction water are also generated, which are burned in the hot gas generator furnace used for heating the reactor. The LTC technology recovers, through the oil and coal produced, about 85% of the energy contained in the original sludge. The oil that contains much of this energy is a transportable and easy to apply fuel.

For being a process that occurs in a reducing atmosphere in the absence of atmospheric oxygen, the LTC technology does not generate dioxins and furans if there is presence of chlorine in the raw material. On the contrary, if chlorinated organic contaminants are present in the material being processed, there is significant destruction of these compounds during the conversion.

Potentially toxic metals possibly present in the raw material are not distillated, remaining in the solid phase (coal). The controlled burning of coal (T<850°C) prevents the volatilization of these metals, which are retained in the ash in the form of oxides and sulfides, for example, for later application to the production of ceramic artifacts.

The micro-nutrients in the biomass are recovered in the ashes of the coal burning.

The use of the pyrolysis technique for the waste treatment is widely discussed in scientific and technical literature, for example:

Patent 1173399 describes a reactor and its respective process for low-temperature pyrolysis (240 to 380°C) for the treatment of municipal solid waste (garbage) and organic waste. The fundamental operation principle of the reactor (retort-type or vertical column-type) described in this patent is the direct heating of the material being processed with the gas generated in the pyrolysis process itself (inert gas). In this process, the condensation of the vapors and the oil generation are not intended. The gases and vapors generated in the pyrolysis are burned to provide the process' thermal needs. The only product is a carbon enriched material (coal).

Patent 0141439 describes a process for treating municipal solid waste (garbage) in which first the material with a moisture content of approximately 30% (in Brazil, the most appropriate number is 60%) is subjected to pressing in hydraulic presses operating at pressures of 15MPa forming blocks, providing pre-drying to remove excess water from the material (water not adsorbed) and standardizing the residual moisture in the block formed.

Then, the blocks are subjected to complete drying in a chamber free of air and exposed to electromagnetic waves with frequency in the range from 300Mz to 300GHz (microwave) for dielectric heating of the water. The optimum working range is from 800MHz to 2.000MHz which is the energy absorption range of the water molecule. Two or more microwave ovens are used in series and the admission and removal of material is made by gates that prevent the entry of air. Exposure to microwaves makes the material (taken to anaerobic conditions) more prone to the following pyrolysis process.

It is recommended that before being subjected to microwave radiation, the block is brought into contact with a hot gas. Thus the hot gas heats a particle from the outside to the inside while the microwave radiation heats it from the inside to the outside benefiting the drying and removal of the oxygen. In order to generate such hot gas, residual heat generated in the compression of the block that is stored in the hydraulic oil may be used. Thus no source of extra heat is required. This drying process occurs in the range of 120°C to 200°C.

The dried block submitted to anaerobic conditions is then subjected to the pyrolysis process. This step can be performed in a usual oven in the range of 350°C to 600°C. In this temperature range, the organic compounds are decomposed forming gases and vapors which are condensed and drained to form an oil phase that has dispersed heavy components (tar). By decanting during a time interval of at least 12 hours, the heavy components can be separated from the oil phase.

The municipal solid waste can be selected or not for the removal of the inorganic material, but preferably the aforementioned patent describes the processing of the not selected material. The metal content in the waste is useful in conducting heat to the interior of the block being processed.

Patent EP0208881 describes the concepts of a pyrolysis plant, mainly focused in the treatment system of pyrolytic gases generated in the process. The pollutants generated in the process are thermally destroyed by passing the gas stream through a molten iron bath gasifier-type converter. In the gasifier, the chemical bonds of the pollutants molecules are broken generating smaller molecules. The patent EP0208881 thus describes a method for treating waste through the pyrolysis. The plant described in patent EP0208881 is presented as suitable for the treatment of various residues such as municipal solid waste (garbage), industrial waste (organic), sewage sludge, waste tires and others, without generating pollution to the environment.

Patent DE4328247A1 describes an apparatus and method for implementing the pyrolysis waste process through direct contact of the waste with superheated vapor which causes mixing, comminution and reduction of the volume of waste in the heating chamber. The cylindrical heating chamber has a helical conveyor with a hollow, tapered shaft with blades mounted at the lower end. The vapor may be a residual vapor or a live vapor and is superheated in a counterflow heat exchanger, the waste heat thereof being used to generate vapor. The coal obtained by the pyrolysis, impregnated under pressure with superheated vapor, is transferred to a second cylinder containing a compressor piston in which it is self-genetically compressed and briquetted by the piston under vacuum generated by the cooling of the outer wall of the cylinder.

Patent DE4429629A1 is a continuation of Patent DE4328247A1. It is noted that the advantage of performing the heating with direct contact between the waste to be processed and the superheated vapor instead of direct contact between the waste and the gas generated in the pyrolysis is the highest capacity and thermal conductivity and increased efficiency of thermal exchange of the first heating method in relation to the second. The superheated vapor also has the characteristic of being inert in the temperature range considered.

Patent RU2239620C2 relates to a process for producing fuel, fertilizer and raw materials for construction from wastewater. The method consists in mixing charges to the partially dewatered sludge followed by the complete drying of the resulting mixture. These charges may be crumbs (fine) of coal or wood waste (sawdust and wood shavings). After the drying, the dewatered sludge is subjected to compression to form granules (pellets) or briquettes. The briquettes are subjected to the pyrolysis process in the temperature range from 350°C to 500°C and residence time of 3.5 to 4.5 hours in anaerobic reducing environment to form semi-coking and a gas/vapor mixture in which the high molecular weight hydrocoals are condensed to produce a liquid fuel (oil) while the non condensed gas is stored and directed to burning on the pyrolysis plant. The six hour processing results in the production of ash and in the gas/vapor mixture.

The main difficulty for effectiveness of the pyrolysis process for processes with indirect heating is to solve the problem of heat exchange that arises due to the coal layer that is formed in the vicinity of the inner walls of the reactor and which is a material of low thermal conductivity. The classical solution for this issue is the use of rotary ovens whose constant revolution continuously removes the layer of raw materials in contact with the top of the oven, but there is always the issue of the high cost of such equipment, which requires dynamic sealing systems to ensure the hermetic conditions required by the process.

Patent 4,618,735 shows an alternative solution which discloses in an apparatus and process for conversion of sludge using a reactor divided into two sectors: the first sector is an endless worm-type mechanism; the second sector, mounted on the same drive axle, provides elevator blades for revolving the material being processed. The limitation of this type of equipment is the manufacture of machines for large capacities, as there are constructive limits to the axis length. The patent US2007/0043246A1 describes the optimization of the conversion conditions into oil of the vapors generated in the pyrolysis process in a reactor with elevator blades.

A similar solution of a reactor provided with endless worm was also adopted in Patent EP1577367A1, which describes a system and process for treating multiphase waste with any ratio of solids, oil and water, in order to obtain hydrocarbons and other products based on the use of a endless worm-type reactor divided into three zones with different heating ramps.

The patent PI0508115-7A describes an apparatus provided with a scraper blade installed at the bottom to turn over and to renew the insulating layer of coal formed by the pyrolysis process.

Each processing system developed by the aforementioned patents has its own variations and characteristics. The biggest challenge to achieve performance in these systems is to provide an efficient heat exchange between the heating medium and the raw material in process; this is because the coal that is formed is a thermal insulating material.

### BRIEF DESCRIPTION OF THE INVENTION

Thinking to all the drawbacks presented in the documents of the technique and being interested in providing enhancements to the consumer market, this "VIBRATING HEAT EXCHANGER EQUIPMENT FOR LOW TEMPERATURE CONVERSION FOR ORGANIC WASTE TREATMENT AND ORGANIC WASTE TREATMENT PROCESSING THROUGH THE USE OF VIBRATING HEAT EXCHANGER EQUIPMENT FOR LOW TEMPERATURE CONVERSION ", adopts a different solution to those previously described, which is configured essentially as a single bypass tube shell-type heat exchanger.

The heat exchanger machine has several internal heater pipes, which have a cylindrical shape and the equipment is mounted so that the axis of the tubes are positioned vertically. The best distribution of the tubes is the triangular distribution, so that a better use of the space inside the reactor is achieved. This pipe distribution benefits the construction of the machines with circular section which will also facilitate the distribution of raw materials as will be seen below.

The raw material to be treated is poured into the "head" of the device (top). The material falls on a distributor taper which has the function to spread the material so that it has access to all heating tubes and is passed continuously on the inside of the tubes from top to bottom due to gravity. Naturally, when the reactor reaches the constant operating regime and is full, the speed at which the material drops is dictated by the withdrawal of the material being processed at the bottom of the reactor. As the material goes down within the tube, it is gradually heated until it reaches the process temperature. The heating is performed indirectly by passing the hot combustion gas injected into the region between the heating tubes. For the insertion and removal of the heating gas, the reactor is provided with two nozzles (entry and exit) coupled to the side of the reactor. In order to have a homogeneous distribution of heat inside the equipment, baffles are placed inside of the reactor inducing the hot gas to travel a longer path and break-off the tendency to be a displacement of the hot gas in the direction parallel to the tubes (generating turbulence). The radial contact of the hot gas with the walls of the heating tubes that transport the raw material improves the thermal exchange.

The gases and vapors generated in the process are removed continuously through a nozzle positioned in the upper funnel of the equipment and part of such gases is condensed in a condenser that generates oil. The cooling of gases and vapors is performed by spraying the oil generated in the process itself, which before being injected into the nozzles passes through a heat exchanger. The non-condensable gases are burned in the furnace that supplies the reactor with hot gas.

The waste material that is not volatilized is the coal. The coal from all heating tubes is collected in the conical bottom (bottom funnel) of the reactor from where it is continuously removed. In order to avoid problems of compression in an unload nozzle, there is a lower taper which limits the amount of material that is addressed to the nozzle. In order to control the flow of incoming and outgoing solids while minimizing the escape of gases generated in the process, the equipment has lock-type valves or rotary-type valves (or a similar mechanism) in the raw material supply upper nozzle and coal unload lower nozzle.

The most important feature of this invention patent application is that, in order to enable the supply of raw material and unload of coal continuously, the equipment is provided with a system which promotes the vibrating movement of the equipment. The vibrating movement gives important functional properties to the invention, such as, for example, promoting the distribution of the raw material poured into the top mirror of the reactor so that there is a tendency for the uniform filling of all heating tubes; increasing the efficiency of heat exchange of the particle - wall system breaking the insulating coal layer generated in the pyrolysis which is formed in the vicinity of the tube inner wall ; minimizing fouling effect and the adhesion of material on the inner walls of the heating tubes; when there is accumulation of fouling, internal cleaning of the reactor is carried out, interrupting the input of raw material, completely unloading the coal produced and then passing an air flow inside the hot reactor that burns the fouling. The vibration helps the internal cleaning of the burned material; minimizes the compression tendency of coal in the unload nozzle and, together with the coal unload cone, allows the continuous and dosed removal of the coal produced.

This vibrating system requires the installation of vibration damping expansion joints in the five nozzles of the machine: two inlet and outlet sides of the hot gas in the side of the reactor, one upper raw material inlet, one lower unload coal and one at the top of the reactor for removing the gases and vapors generated in the process. Thus it avoids the propagation of the vibration to the other pipes and fittings of the plant.

Regarding the handling of solids, the supply of raw material is performed from a single nozzle, in the same way, the unload of carbon is also made through a single nozzle. This feature simplifies the solids handling system, as conventional systems such as conveyors, bucket elevators and screw conveyors are used.

The construction type of the present invention facilitates the adoption of standardized flanges and the construction of a hermetic equipment, such a condition for the proper execution of the conversion process that requires a low temperature atmosphere free of atmospheric oxygen.

The diameter of the raw material conductor heater pipe is chosen so as to achieve the greatest production capacity and the highest possible heat transfer efficiency, i.e. the diameter is as large as possible to accommodate the largest quantity of material to be processed in the tube and as small as necessary to avoid hindering the heat exchange between the tube wall and the material in the process inside the tube.

An interesting feature of the present invention is that the variation in the number of heating pipes leading to the raw material and the length thereof, allows the construction of machines that comprise a wide working range extending from 2t/day to 300t/day or more.

### DESCRIPTION OF THE DRAWINGS

To complement this description so as to obtain a better understanding of the characteristics of the present invention and according to a preferred embodiment thereof, a set of drawings accompany this description which, in a manner exemplified, but not limited to, is represented as follows:
- Figure 1: shows a section of a vibrating heat exchanger machine with 19 heating tubes;
- Figure 2: shows different possible construction models: as the number of tubes is increased, the height of each tube is also increased; this constructive form allows the manufacture of equipments covering a wide range of processing capability, and
- Figure 3: shows a typical industrial arrangement of the equipment.

### DETAILED DESCRIPTION OF THE INVENTION

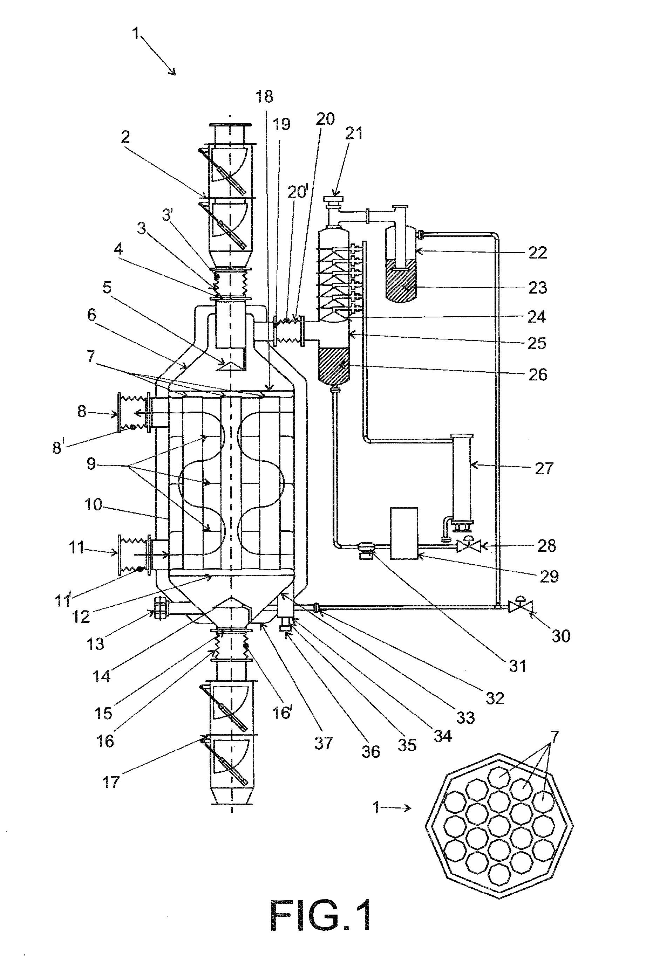

Figure 1 shows a section of a first vibrating heat exchanger equipment (1) with heating tubes (19). The material to be processed is unloaded via inlet valve for raw material (2) installed on the supply nozzle (4) located in the upper funnel (6) of the equipment (1), falling onto a distributor cone (5) which has the function to spread the material so that it has access to the internal space of all heating tubes (7). The material flows continuously from the inside of the tubes from top to bottom due to gravity. Naturally, when the reactor reaches the constant operating regime and is filled, the speed at which the material falls continuous withdrawal is dictated by the coal withdrawal via unload valve coal (17) installed in the unload nozzle (15) located below the funnel (33) of the equipment (1).

As the material goes down within the tube, it is gradually heated until it reaches the process temperature. The heating is performed indirectly by passing the hot combustion gas injected into the region between the heating tubes. For the insertion and withdrawal of the heating gas, the equipment (1) is provided with two nozzles, the inlet (11) and outlet (8), coupled to the side of the reactor (1). In order to obtain a homogeneous heat distribution within said equipment (1), baffles (9) internal to the reactor are placed, making the hot gas to travel a longer path and to break-off the tendency to be a displacement of the hot gas in the direction parallel to the tubes (generating turbulence). The radial contact of the hot gas with the walls of the heating tubes that lead the raw material improves the thermal exchange. To reduce heat losses, the reactor has a thermal coating based on insulating blankets (37). The hot gas leaving the reactor via the outlet nozzle (8) can be used for drying the raw material to be processed.

The gases and vapors generated in the process are collected in the inverted upper funnel (6) and addressed to the vapor circulation nozzle (19) positioned on top of the equipment (1). Some of these gases are condensed in a condenser (25) generating oil (26) which, as it is produced, it is transferred to storage tanks (not shown in the figure) via the oil transfer valve (28). The cooling of gases and vapors is carried out by spraying the oil itself generated in the process which is pumped by the pump (31) and before being injected into the nozzles (24) passes through a particle filter (29) and heat exchanger (27). The non-condensable gases (23), leaving the condensing unit, pass through a tank bubbler (22) that prevents entry of oxygen into the reactor and are directed into the burning furnace that supplies the reactor with hot gas (not shown in the drawing) via non-condensable gases transfer valve (30) and re-circulated into the reactor via a non-condensable gases re-circulation nozzle (32) installed on the lower funnel (33) of the equipment (1). The re-circulation direction of the non-condensable gases is countercurrent to the flow of solids. The re-circulation of non-condensable gases reduces the residence time of vapors generated by the pyrolysis process inside the reactor and maximizes the oil production. For the operating safety, the reactor is provided with a bursting disc-type valve (21).

The waste material that is not volatilized is coal. The coal of all heating tubes is collected in the lower funnel (33) of the equipment (1) which is removed continuously. To avoid problems of compaction in the unload nozzle, a cone (14) is provided which limits the amount of material that is directed to the coal unload nozzle (15) and its unload coal lock-type valve (17) as shown in Figure 1 (or rotary).

The equipment (1) is provided with a device (13), mechanical or pneumatic, which causes the vibrating motion of the reactor (1) and to allow this vibration, the reactor legs (34) are mounted on spring-type or pneumatic pads (35). To prevent the propagation of vibration to the other system parts (supply valves and unload of solids, hot gas pipes and vapors circulation pipe) all nozzles are interconnected by vibration damper expansion joints (3', 8', 11', 16' and 20').

In order to allow control of the level of raw material inside the equipment (1), which ideally is kept at the upper nozzle of each heating tube, the reactor is mounted on a set of load cells (36) which monitors the assembly weight, reactor plus material being processed and controls the rate of opening and closing of raw material supply lock-type and coal unload valves (or rotary in the case of rotary valves).

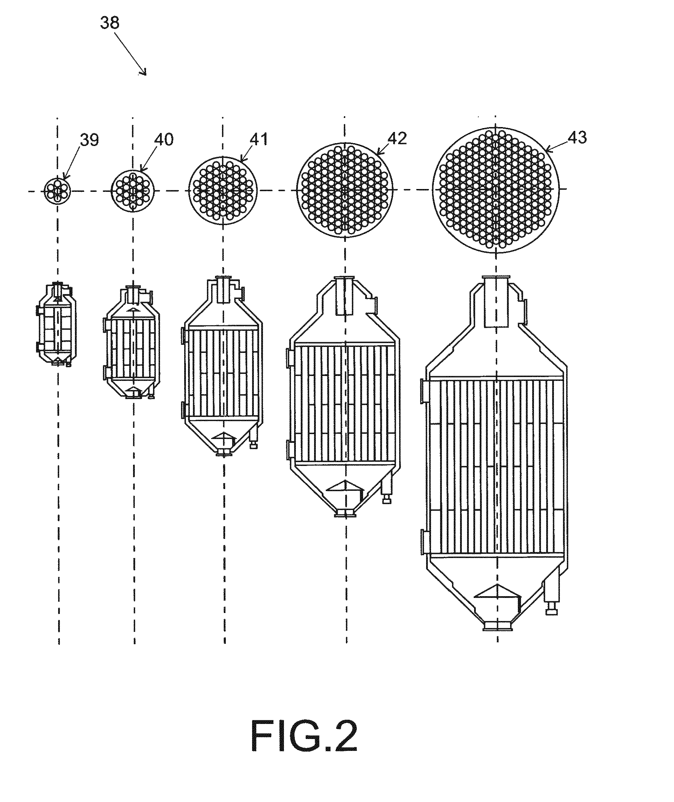

Figure 2 shows a straight cross-section of the heat exchanger showing possible mounting positions with different numbers of heating tubes. The distribution of the tubes is the triangular distribution, so that a better utilization of the internal space of the reactor is provided. It is shown an assembly (38) of five possible sizes of the reactor: the first (39) with 7 tubes, the second (40) with 19 tubes, the third (41) with 55 tubes, the fourth (42) with 121 tubes and the fifth (43) with 211 tubes. As the number of tubes is increased, the length thereof and therefore the overall height of the equipment (1) is also increased.

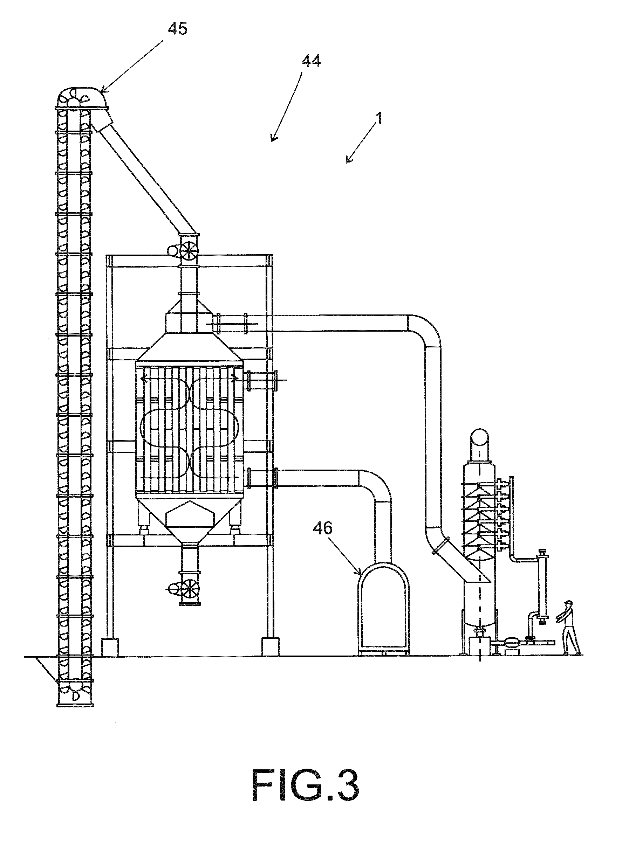

Figure 3 shows a typical plant (44) employing a vibrating heat exchanger equipment 1 in which the raw material supply is carried out by means of bucket elevators (45). For this operation, conveyors or belt conveyors could also be used. For the transportation of unloaded coal is convenient to use jacketed conveyors with chilled water to promote the cooling of the coal produced. Figure 3 also shows the hot gas generator furnace (46) which heats the reactor. In this furnace, besides the supplementary fuel (LPG, wood, biomass wastes, coal and oil itself generated in the process, etc.) non-condensable gases generated in the pyrolytic process are also burned.

### OBJECTIVES OF THE INVENTION

It is the objective of the present invention an equipment (1) for processing sludge and other lipids and proteins rich organic wastes through the Low Temperature Conversion - LTC. The LTC process is a pyrolysis process at a low temperature (380 - 450°C) self catalyzed by the inorganic elements contained in the raw material itself.

Another objective of the present invention is to achieve a machine that works in a regime of continuous operation to facilitate the operation of the equipment (1), including through a high degree of automation, thus allowing achieving high processing capabilities and operational ease.

Moreover, to develop an equipment (1) with a raw material supply single nozzle (4) in order to facilitate the use of conventional solid transportation equipment as belt conveyors, screw conveyors or bucket elevators (45) to perform this function.

Another key aspect of the present invention is the uniform distribution of the raw material for all heating tubes (7) in order to achieve the homogeneity of the products (coal and oil) as all heating tubes will operate with virtually the same residence time. In order to fulfill this function, the equipment (1) is provided with a raw material distribution upper cone (5) and is provided with the vibrating movement.

Another objective of the present invention is to develop a equipment (1) with a single coal unload nozzle (15) to facilitate the use of conventional transport equipments as screw conveyors, inclusive using conveyors jacketed with chilled water to allow cooling of the coal as it is unloaded avoiding the ignition problem of the material.

Also, another objective of the present invention is to develop an equipment (1) with vibrating movement so as to facilitate the unload of coal avoiding the formation of bridges and tunnels in the coal collector bottom funnel (33).

It provides also the equipment (1) with lock-type valves (2) and (17) or rotary-type valve both for supplying raw material and for unloading coal. These valves allow the transport of solids maintaining the equipment (1) closed, preventing the entry of atmospheric air and ensuring the tightness of the reactor (1) that is critical to the pyrolysis process.

Another objective of the present invention is to develop a equipment (1) consisting of a tube shell-type heat exchanger in which the raw material to be processed is passed through within the heating tubes (7) and the heating gas is passed out of the tubes.

The equipment (1) further comprises two nozzles (8 and 11) positioned on the side of the said equipment (1). The lower nozzle (11) serves as the heating gas inlet and the upper nozzle (8) for the hot gas outlet. Thus, the convective motion of the hot gas is favored.

In the body of the equipment (1) are provided baffles (9) deflecting the hot gas so as to provide a snake-type movement to the heated gas, the gas is inserted into the lower nozzle (11) and faces a baffle plate (12) which directs the gas to fill the ring generated in the vicinity of the side. A first deflection baffle (9) with central aperture, directs the gas into the center of the equipment (1) as the gas moves upward. A second deflection baffle (9), located above, with openings at the edges, directs the hot gas to the region close to the side as the gas moves upward. A third deflection baffle (9), located above, with the central aperture, directs the gas back to the center of the equipment (1) as the gas moves upward. The gas then reaches the sector between the third baffle (9) and the top mirror (18) and is addressed to the ring generated in the vicinity of the side and finally to the outlet nozzle (8) positioned on the side (10). These baffles (9) prevent the movement of the hot gas in a laminar flow parallel to the heating tubes (7), increase the residence time of the hot gas and improve the heat transfer.

Another important aspect of this patent application is to promote the movement of the raw material in counterflow to the hot gas flow, i.e. the raw material moves up and down inside the heating tube (7) and the heating gas moves upwards, out of the heating tubes (7).

Furthermore, this document aims at providing the equipment (1) of an upper funnel (6) which serves as a gas and vapors collecting hood generated in the pyrolytic process.

It further provides a nozzle (32) at the lower funnel (33) that serves to re-circulate non-condensable gases and vapors generated during the reaction medium. This re-circulation is carried out in counterflow, i.e. the raw material moves up and down inside the heating tube (7) and the recirculating gas moves upwards, inside the heating tube (7). The re-circulation of non-condensable gases reduces the residence time of vapors generated by the pyrolysis process inside the reactor and maximizes the oil production.

It further provides a condenser system (25) of the vapors generated in the process forming the oil. The composition of such oil depends on the type of raw material. The condensation is brought about by cooling the vapor by spraying the oil itself generated in the process that before being sprayed is pumped by the pump (31) filtered in the filter (29) and indirectly cooled in a heat exchanger (27) with water coming from a cooling tower.

Another objective of the present invention is to provide a furnace system (46) generating the combustion gas which is intended for heating the equipment (1). This furnace (46) operates with a supplementary fuel (Liquid Petroleum Gas - LPG, firewood, biomass waste, the actual coal and oil generated in the process, etc.). In this furnace (46) non-condensable gases (NCG) generated in the pyrolytic process are also burned, separated from the condensable vapor in the condenser (25).

Although the invention is detailed, it is important to understand that it does not limit its application regarding the details, and steps described herein. The invention is capable of other embodiments and of being practiced or carried out in a variety of ways. It should be understood that the terminology employed herein is for the purpose of description and not limitation.

## Claims

1. "VIBRATING HEAT EXCHANGER EQUIPMENT FOR LOW TEMPERATURE CONVERSION FOR ORGANIC WASTE TREATMENT AND ORGANIC WASTE TREATMENT PROCESS THROUGH THE USE OF VIBRATING HEAT EXCHANGER EQUIPMENT FOR LOW TEMPERATURE CONVERSION", characterized as being a single bypass tube shell-type heat exchanger (1), in which the raw material to be processed is introduced into the internal space of the heating tubes (7) and the heating gas (combustion gas) is passed into the space between the heater tubes.

2. "VIBRATING HEAT EXCHANGER EQUIPMENT FOR LOW TEMPERATURE CONVERSION FOR ORGANIC WASTE TREATMENT AND ORGANIC WASTE TREATMENT PROCESS THROUGH THE USE OF VIBRATING HEAT EXCHANGER EQUIPMENT FOR LOW TEMPERATURE CONVERSION", according to claim 1, **characterized in that** the heat transfer made indirectly, without direct contact of the heating gas with the material to be processed thus allowing to obtain, in the reaction region, a reducing atmosphere free of oxygen of the heating gas.

3. "VIBRATING HEAT EXCHANGER EQUIPMENT FOR LOW TEMPERATURE CONVERSION FOR ORGANIC WASTE TREATMENT AND ORGANIC WASTE TREATMENT PROCESS THROUGH THE USE OF VIBRATING HEAT EXCHANGER EQUIPMENT FOR LOW TEMPERATURE CONVERSION", according to claims 1 and 2, **characterized in that** it operates continuously through the continuous downward movement of the raw material under process within the vertically mounted heating tubes (7).

4. "VIBRATING HEAT EXCHANGER EQUIPMENT FOR LOW TEMPERATURE CONVERSION FOR ORGANIC WASTE TREATMENT AND ORGANIC WASTE TREATMENT PROCESS THROUGH THE USE OF VIBRATING HEAT EXCHANGER EQUIPMENT FOR LOW TEMPERATURE CONVERSION", according to claims 1, 2 and 3 wherein it is a heat exchanger equipment (1) with vibrating movement which allows the thermal processing of organic waste.

5. "VIBRATING HEAT EXCHANGER EQUIPMENT FOR LOW TEMPERATURE CONVERSION FOR ORGANIC WASTE TREATMENT AND ORGANIC WASTE TREATMENT PROCESS THROUGH THE USE OF VIBRATING HEAT EXCHANGER EQUIPMENT FOR LOW TEMPERATURE CONVERSION", according to claims 1, 2, 3 and 4, wherein it is used for the thermal processing of organic waste referred to as conversion of low temperature operating in the range of 350°C to 450 °C, preferably from 380 °C to 420 °C, producing oil and coal.

6. "VIBRATING HEAT EXCHANGER EQUIPMENT FOR LOW TEMPERATURE CONVERSION FOR ORGANIC WASTE TREATMENT AND ORGANIC WASTE TREATMENT PROCESS THROUGH THE USE OF VIBRATING HEAT EXCHANGER EQUIPMENT FOR LOW TEMPERATURE CONVERSION", according to claims 1, 2, 3, 4 and 5, wherein it is provided with valves which allow the introduction of raw material at the top (2) of the equipment (1) and the removal of coal formed by the bottom of the reactor (17); said valves being the lock-type valves or the rotary-type valves which allow the introduction and removal of solid material with minimal leakage of process gas and entrance of atmospheric air into the equipment (1).

7. "VIBRATING HEAT EXCHANGER EQUIPMENT FOR LOW TEMPERATURE CONVERSION FOR ORGANIC WASTE TREATMENT AND ORGANIC WASTE TREATMENT PROCESS THROUGH THE USE OF VIBRATING HEAT EXCHANGER EQUIPMENT FOR LOW TEMPERATURE CONVERSION", according to claims 1a d 6, wherein the raw material supply and the coal removal is carried out continuously.

8. "VIBRATING HEAT EXCHANGER EQUIPMENT FOR LOW TEMPERATURE CONVERSION FOR ORGANIC WASTE TREATMENT AND ORGANIC WASTE TREATMENT PROCESS THROUGH THE USE OF VIBRATING HEAT EXCHANGER EQUIPMENT FOR LOW TEMPERATURE CONVERSION", according to claims 1, 6 and 7, wherein the raw material supply and the coal removal is carried out in a sealed way through the use of lock-type and rotary-type valves (2) and (17).

9. "VIBRATING HEAT EXCHANGER EQUIPMENT FOR LOW TEMPERATURE CONVERSION FOR ORGANIC WASTE TREATMENT AND ORGANIC WASTE TREATMENT PROCESS THROUGH THE USE OF VIBRATING HEAT EXCHANGER EQUIPMENT FOR LOW TEMPERATURE CONVERSION", according to claims 1, 2, 3, 4 and 5, wherein it presents an unit for condensation of vapors (25) generated in the pyrolytic process with the consequent production of oil.

10. "VIBRATING HEAT EXCHANGER EQUIPMENT FOR LOW TEMPERATURE CONVERSION FOR ORGANIC WASTE TREATMENT AND ORGANIC WASTE TREATMENT PROCESS THROUGH THE USE OF VIBRATING HEAT EXCHANGER EQUIPMENT FOR LOW TEMPERATURE CONVERSION", according to claims 1, 2, 3, 4, 5 and 9, wherein the condensation of oil is caused by the cooling of the vapors by spraying the oil itself generated in the process (24), previously cooled in a heat exchanger (27).

11. "VIBRATING HEAT EXCHANGER EQUIPMENT FOR LOW TEMPERATURE CONVERSION FOR ORGANIC WASTE TREATMENT AND ORGANIC WASTE TREATMENT PROCESS THROUGH THE USE OF VIBRATING HEAT EXCHANGER EQUIPMENT FOR LOW TEMPERATURE CONVERSION", according to claims 1, 2, 3, 4, 5 and 9, wherein the non-condensable gases that leave the condensation unit (25) pass through a bubbling tank (22) which prevents the ingress of atmospheric oxygen into the equipment (1).

12. "VIBRATING HEAT EXCHANGER EQUIPMENT FOR LOW TEMPERATURE CONVERSION FOR ORGANIC WASTE TREATMENT AND ORGANIC WASTE TREATMENT PROCESS THROUGH THE USE OF VIBRATING HEAT EXCHANGER EQUIPMENT FOR LOW TEMPERATURE CONVERSION", according to claims 1, 2, 3, 4 and 5, wherein it allows the recirculation of the non-condensable gases generated in the pyrolytic process through the recirculation nozzle (32) installed on the lower funnel (33) of equipment (1).

13. "VIBRATING HEAT EXCHANGER EQUIPMENT FOR LOW TEMPERATURE CONVERSION FOR ORGANIC WASTE TREATMENT AND ORGANIC WASTE TREATMENT PROCESS THROUGH THE USE OF VIBRATING HEAT EXCHANGER EQUIPMENT FOR LOW TEMPERATURE CONVERSION", according to claims 1, 2, 3, 4, and 5, wherein the equipment side (1) is thermally insulated.

14. "VIBRATING HEAT EXCHANGER EQUIPMENT FOR LOW TEMPERATURE CONVERSION FOR ORGANIC WASTE TREATMENT AND ORGANIC WASTE TREATMENT PROCESS THROUGH THE USE OF VIBRATING HEAT EXCHANGER EQUIPMENT FOR LOW TEMPERATURE CONVERSION", according to claims 1, 2, 3, 4, wherein the heating tubes are vertically mounted in the side according to a triangular distribution.

15. "VIBRATING HEAT EXCHANGER EQUIPMENT FOR LOW TEMPERATURE CONVERSION FOR ORGANIC WASTE TREATMENT AND ORGANIC WASTE TREATMENT PROCESS THROUGH THE USE OF VIBRATING HEAT EXCHANGER EQUIPMENT FOR LOW TEMPERATURE CONVERSION", according to claims 1, 2, 3, 4 and 6, wherein the equipment (1) has an upper raw material feeding funnel (6) and a lower funnel (33) to capture coal from all the heater pipes (7) which directs it to the discharge nozzle (15).

16. "VIBRATING HEAT EXCHANGER EQUIPMENT FOR LOW TEMPERATURE CONVERSION FOR ORGANIC WASTE TREATMENT AND ORGANIC WASTE TREATMENT PROCESS THROUGH THE USE OF VIBRATING HEAT EXCHANGER EQUIPMENT FOR LOW TEMPERATURE CONVERSION", according to claims 1, 2, 3, 4 and 6, wherein apparatus has an upper distribution cone (5) of raw materials for all heating tubes (7) and a lower cone (14) which prevents the formation of bridges and tunnels in the coal collector bottom funnel (33).

17. "VIBRATING HEAT EXCHANGER EQUIPMENT FOR LOW TEMPERATURE CONVERSION FOR ORGANIC WASTE TREATMENT AND ORGANIC WASTE TREATMENT PROCESS THROUGH THE USE OF VIBRATING HEAT EXCHANGER EQUIPMENT FOR LOW TEMPERATURE CONVERSION", according to claims 1, 2, 3, 4 and 7, wherein the feet of the reactor (34) are mounted on load cells (36) monitoring the volume of the material being processed and enabling the automation of the equipment (1).
